# EUROPEAN PATENT SPECIFICATION

(11) **EP 4 589 148 B1**
(45) Date of publication and mention of the grant of the patent: **12.08.2026**
(21) Application number: 25151803.1
(22) Date of filing: 14.01.2025
(51) Int. Cl.: F04C 18/02, F04C 23/00, F04C 29/12

(54) **CONNECTOR ASSEMBLY FOR SCROLL COMPRESSOR**
VERBINDERANORDNUNG FÜR SPIRALVERDICHTER
ENSEMBLE CONNECTEUR POUR COMPRESSEUR À SPIRALE

(30) Priority: 17.01.2024 US 202463621712 P
(43) Date of publication of application: 23.07.2025
(73) Proprietor: Carrier Corporation, Palm Beach Gardens, FL 33418 (US)
(72) Inventor: LEE, KeonWoo, East Syracuse, NY 13057 (US); VANG, Ping, East Syracuse, NY 13057 (US)
(74) Representative: Dehns

(56) References cited:
- WO-A1-2016/039042
- CN-U- 202 108 685
- US-A- 4 606 706
- US-A1- 2022 412 359

## Description

This invention relates to the field of scroll compressors, and more particularly, a connector assembly for scroll compressors, which facilitates the connection of pipes/conduits to one or more ports of the scroll compressor.

US 4 606 706 A discloses a hermetic compressor, a seal extending between a suction port and a second port in fluid communication with an internal chamber disposed adjacent an electric motor. The seal includes a cylindrical tubular member, one end of which slidingly fits within the suction port. A slotted conical flange on the other end of the tubular
member fits around the port on the chamber. When a suction line is attached to the suction port with a threaded nut and fitting, it abuts against the projecting end of the tubular member, forcing the cone-shaped flange on the other end of the tubular member to flatten slightly as it seats against the external surface of the chamber.

According to the invention there is provided a connector assembly for a scroll compressor. The assembly comprises a rotalock adaptor having a first end configured to be attached to an outer surface of the compressor at one or more ports of the compressor such that a longitudinally extending bore-hole of the rotalock adaptor remains in line and fluidically connected to the corresponding port, and a first tube extending coaxially through the bore-hole of the rotalock adaptor via a second end of the rotalock adaptor such that a first end of the first tube extends at least partially within an inner chamber of the compressor via the corresponding port and a second end of the first tube extends at least partially outside of the second end of the rotalock adaptor, wherein a connecting end of a conduit to be fluidically connected to the corresponding port is configured to be coaxially connected to the second end of the first tube and further secured to the first tube and the rotalock adaptor using a fastener, and wherein the assembly comprises a second tube of a first predefined length coaxially disposed within the first end of the first tube, wherein the second tube is configured to be expanded within the first tube and correspondingly keep the first tube in contact with a rim of the corresponding port to create a leak-proof connection between the rim and the first tube.

Optionally, the one or more ports comprise a suction port, wherein the conduit is associated with and fluidically connected to a service valve.

Optionally, the one or more ports comprise a vapor injection port, wherein the conduit is associated with and fluidically connected to an economizer.

Optionally, the conduit is assembled to the rotalock adaptor using a flare nut.

Optionally, the rotalock adaptor comprises a housing that is rotationally symmetric about a longitudinal axis of the rotalock adaptor and having the bore-hole extending along the longitudinal axis between the first end and the second end of the housing.

Optionally, the fastener is a flare nut that is rotatably configured around the connecting end of the conduit.

Optionally, the second end of the rotalock adaptor comprises an external thread and the flare nut comprises an internal thread adapted to rotatably engage and fastened to the external threads of the rotalock adaptor to secure the conduit to the first tube and the rotalock adaptor.

Optionally, the conduit is fluidically connected and secured to the corresponding port using the flare nut such that the flare nut and/or the second end of the rotalock encloses a connection point between the conduit and the first tube.

Optionally, the second tube is made of a metal.

Optionally, the assembly comprises a third tube of a second predefined length coaxially disposed in a gap between an outer surface of the second end of the first tube and the second end of the rotalock adaptor, and the connected conduit.

Optionally, the third tube extends at least partially within the bore-hole of the rotalock adaptor and the connected conduit.

Optionally, the third tube is made of copper, wherein the third tube is brazed to the conduit, the first tube, and the rotalock adaptor.

Optionally, the connecting end of the conduit is coaxially connected to the second end of the first tube, such that the second end of the first tube extends at least partially within the conduit.

Optionally, the rotalock adaptor is made of stainless steel.

Optionally, the first end of the rotalock adaptor is welded to the outer surface of the compressor at the one or more ports of the compressor.

Optionally, the first end of the rotalock adaptor comprises a raised portion that is configured to be welded to the outer surface of the compressor at the one or more ports of the compressor.

The foregoing summary is illustrative only and is not intended to be in any way limiting. In addition to the illustrative aspects, embodiments, and features described above, further aspects, embodiments, features, and techniques of the subject invention will become more apparent from the following description taken in conjunction with the drawings.

The accompanying drawings are included by way of example only to provide a further understanding of the subject invention and are incorporated in and constitute a part of this specification. The drawings illustrate exemplary embodiments of the subject invention and, together with the description, serve to explain the principles of the subject invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A illustrates an exemplary perspective view of a scroll compressor comprising one or more ports, each fitted with a connector assembly.
FIG. 1B illustrates an exemplary perspective view of the scroll compressor of FIG. 1A having a service valve and other conduits connected to the ports of the compressor via the connector assembly.
FIG. 2 illustrates an exemplary cross-section view of the connector assembly .
FIG. 3 illustrates an exemplary cross-section view depicting the connection of a first conduit associated with the service valve with the suction port of the compressor via the connector assembly.
FIG. 4 illustrates an exemplary detailed cross-section view depicting the connection of a second conduit associated with an economizer with the vapor injection port of the compressor via the connector assembly.

The following is a detailed description of embodiments of the subject disclosure depicted in the accompanying drawings. The embodiments are in such detail as to clearly communicate the subject disclosure. However, the amount of detail offered is not intended to limit the anticipated variations of embodiments; on the contrary, the intention is to cover all modifications and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. Described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components, respectively, described herein may be oriented in any desired direction.

Various ports of the scroll compressor, including the suction port, discharge port, and vapor injection port, traditionally utilize a flanged connection to connect to the refrigerant circuit piping. However, the traditional flanged connection presents several challenges that may compromise the overall reliability and durability of the compressor assembly.

One significant issue arises from the weakness observed in the brazing joint between the compressor tube (extending out of the ports) and the flange connecting tube when subjected to shock and vibration during transport applications. This weakness may lead to failure and, consequently, reduced system performance and reliability. Additionally, achieving the required assembly control to meet design tolerances becomes a challenging task.

Moreover, the alignment of the two connection joints plays an important role in determining the assembly stress. Misalignment while assembling may result in higher assembly stress, further exacerbating the vulnerability of the brazing joint and increasing the risk of failure. The use of flange connections introduces this additional challenge in the form of difficulty in mating the flange connectors, which may lead to additional stress on the assembly, contributing to an increased risk of connection joint failure and piping.

There is therefore a need for a solution to effectively address the challenges associated with scroll compressors, by providing a simple and improved connector assembly for the scroll compressors, which facilitates connection of pipes or conduits to one or more ports of the scroll compressor.

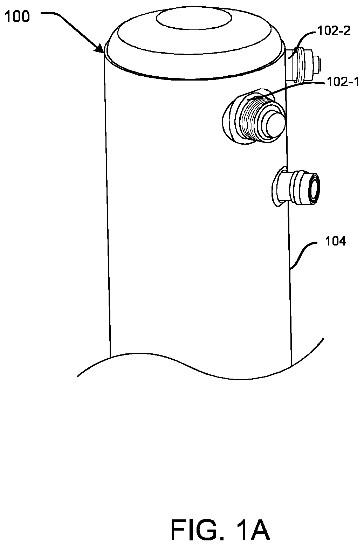

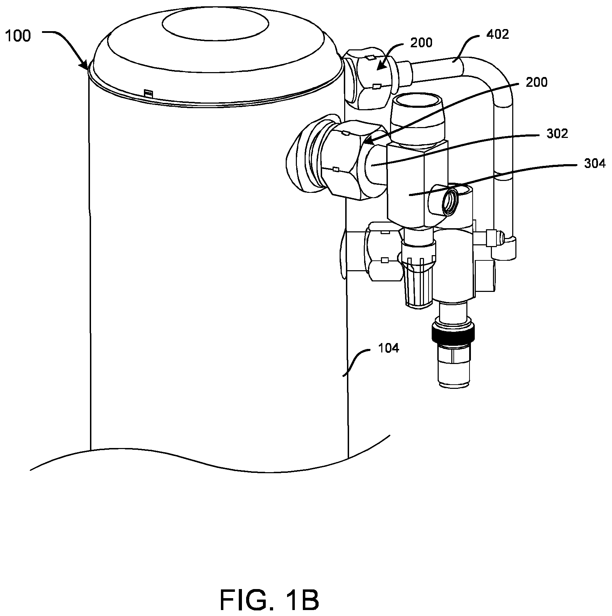

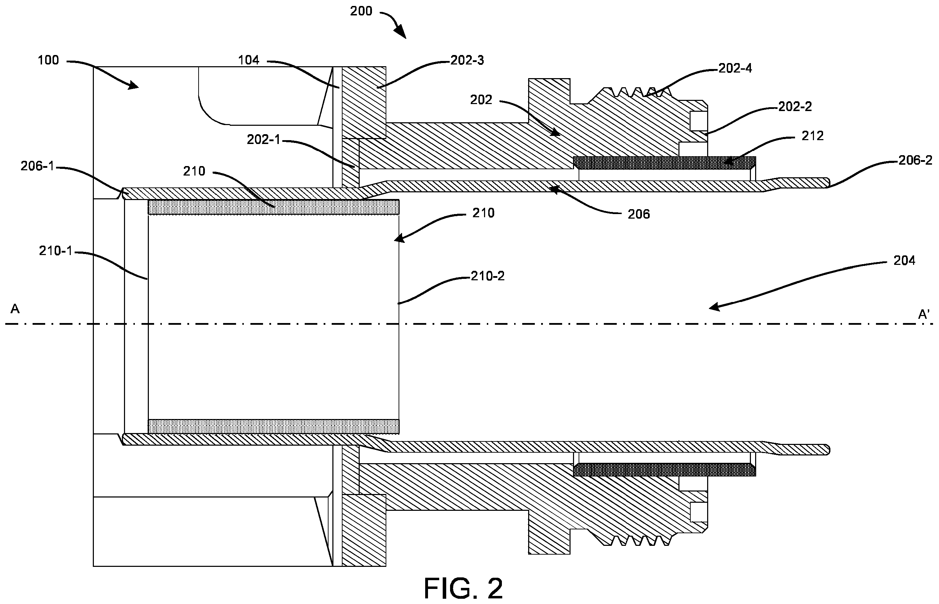

Referring to FIG. 1A to 2, a connector assembly 200 for a scroll compressor 100 is disclosed. The connector assembly enables the fitment of conduits or piping to one or more ports, including a suction port 102-1, and a vapor injection port (or economizer port) 102-2 (collectively designated as 102, herein) associated with the scroll compressor 100 (referred to as compressor 100, herein). In one or more embodiments, referring to FIG. 2, the connector assembly 200 (also referred to as assembly, herein) can include a rotalock adaptor 202 (also referred to as rotalock fitting 202, herein) having a first end 202-1 configured to be attached to an outer surface 104 of the compressor 100 at each of ports of the compressor 100, and a second end 202-2 (opposite to the first end) configured to be connected to a connecting end of a conduit to be fluidically connected to the corresponding port 102.

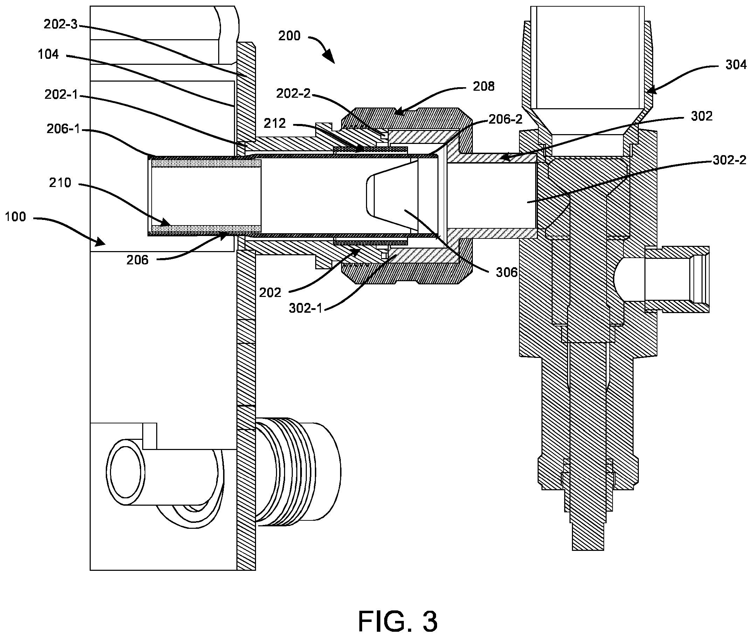

In one or more embodiments, referring to FIG. 3, the assembly 200 can enable fitment of a (first) conduit 302 associated with a service valve 304 to the suction port 102-1 of the compressor 100. A first (connecting) end 302-1 of the first conduit 302 can be connected to the second end 202-2 of the rotalock adaptor 202 and a second end 302-2 of the first conduit 302 can be connected with the service valve 304, with a suction screen 306 configured at the connecting end 302-1 of the first conduit 302.

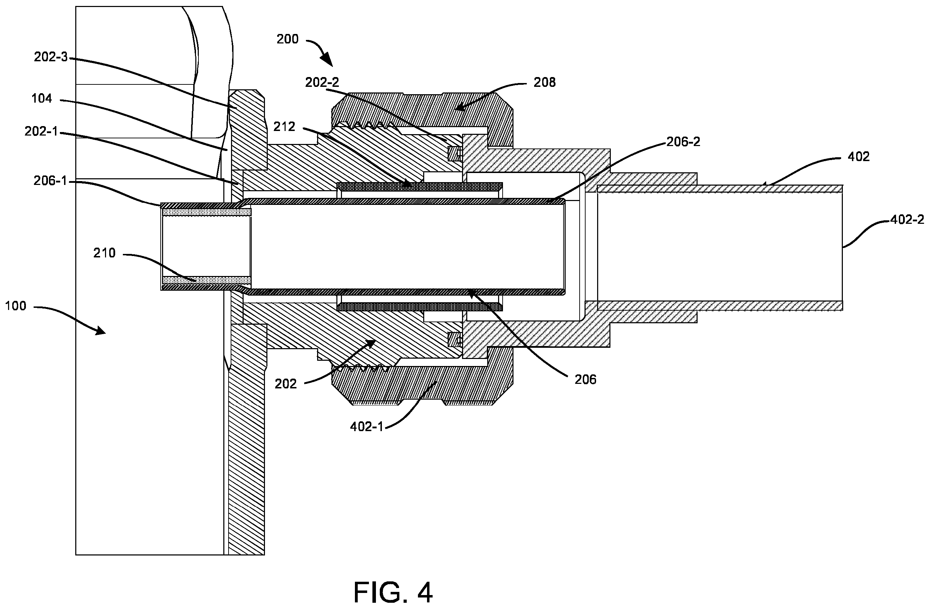

Further, in one or more embodiments, referring to FIG. 4, the assembly 200 can enable the fitment of a (second) conduit 402 associated with an economizer to the vapor injection port 102-2 of the compressor 100. A first (connecting) end 402-1 of the second conduit 402 can be connected to the second end 202-2 of the rotalock assembly 202 and a second end 402-2 of the second conduit 402 can be connected to the economizer (not illustrated here).

As illustrated, the compressor 100 can include a separate connector assembly 200 for each of the suction port 102-1, and the vapor injection port 102-2, however, the detailed construction of the connector assembly 200 has been collectively explained herein for the port(s) 102 of the compressor 100 for the sake of brevity.

Referring back to FIG. 2, in one or more embodiments, the rotalock adaptor 202 of the assembly can include a housing that can be rotationally symmetric about its longitudinal axis A-A' and has a bore-hole 204 extending longitudinally along the longitudinal axis A-A' between the first end 202-1 and the second end 202-2 of the housing. The first end 202-1 of the rotalock adaptor can be attached to the outer surface 104 of the compressor 100 at the port(s) 102 of the compressor 100 such that the longitudinally extending bore-hole 204 of the rotalock adaptor 202 remains in line and fluidically connected to the corresponding ports) 102.

The assembly 200 can further include a first tube 206 extending coaxially through the bore-hole 204 of the rotalock adaptor 202 via the second end of the rotalock adaptor 202 such that the first end 206-1 of the first tube 206 extends at least partially within an inner chamber of the compressor 100 via the corresponding port 102 and a second end 206-2 of the first tube extends at least partially outside of the second end 202-2 of the rotalock adaptor 202.

In one or more embodiments, as illustrated in FIGs. 3 and 4, a connecting end of the (first and/or second) conduit 302, 402 (to be fluidically connected to the corresponding port (suction port 102-1 and/or vapor injection port 102-2)) can be coaxially connected to the second end 206-2 of the first tube 206 and further secured to the first tube 206 and the rotalock adaptor 202 using a fastener 208 such as but not limited to a flare nut. In one or more embodiments, the connecting end of the conduit 302, 402 can be coaxially connected to the second end 206-2 of the first tube 206, such that the second end 206-2 of the first tube 206 extends at least partially within the conduit 302, 402.

Referring back to FIG. 2, in one or more embodiments, the assembly 200 includes a second tube 210 of a first predefined length and radius coaxially disposed within the first end 206-1 of the first tube 206. The second tube 210 can have a length and radius substantially smaller than the length and radius of the first tube 206 such that the second tube 210 remains within the first tube 206, adj acent to an inner rim of the port 102 of the compressor 100, however, the second tube 210 may have a length greater than the thickness of the inner rim of the corresponding port 102 such that the two ends 210-1, 210-2 remains on either sides of the rim. In one or more embodiments, the second tube 210 can be made of metal but is not limited to the like, that can be configured to be expanded within the first tube 206, which can correspondingly keep the first tube 206 in tight fitment with the inner rim of the corresponding port 102. Further, the second tube 210 is configured to be mechanically expanded within the first tube 206 to create a leak-proof connection between the rim of the ports 102 and (second end of) the first tube 206.

In one or more embodiments, the first end 202-1 of the rotalock adaptor 202 can include a raised portion 202-3 that can be configured to be welded to the outer surface 104 of the compressor 100 at the one or more ports 102 of the compressor 100. Further, the second end 202-2 of the rotalock adaptor 202 can include an external thread 202-4 that facilitates securing the conduit 302, 402 to the second end 202-2 of the rotalock adaptor 202 via the flare nut 208. In one or more embodiments, the rotalock adaptor 202 and the raised portion 202-3 can be made of stainless steel but is not limited to the like.

In one or more embodiment, the flare nut 208 can be rotatably configured around the connecting end of the conduit 302, 402. Further, the flare nut 208 can include an internal thread complementary to the external thread 202-4 of the rotalock adaptor 202, such the internal thread of the flare nut 208 can rotatably engage and fasten to the external thread 202-4 of the rotalock adaptor 202, thereby securing the conduit 302, 402 to the first tube 206 and the rotalock adaptor 202. Accordingly, as illustrated in FIGs. 3 and 4, the (first or second) conduits 302, 304 can be fluidically connected and secured to the corresponding (suction or economizer) ports 102 using the flare nut 208 such that the flare nut 208 and/or the second end 202-2 of the rotalock adaptor 202 encloses or remains around a connection point or joint between the conduit 302, 402 and the first tube 206. In addition, the conduit 302, 402, and the first tube 206 can be brazed together to create a secured, reliable, and leak-proof connection between the conduit and the compressor 100.

In one or more embodiments, the assembly 200 can include a third tube 212 of a second predefined length and radius extending at least partially within the bore-hole 204 of the rotalock adaptor 202 as well as the connected conduit 302, 402 such that the third tube 212 remains disposed in a gap between an outer surface of the second end 206-2 of the first tube 206 and the second end 202-2, and the connected conduit 302, 402, where a Teflon seal/O-ring seal can be used to provide leak tight sealing between the conduit 302, 402 and the rotalock adaptor 202. Further, in one or more embodiments, the third tube 212 can be made of copper, but is not limited to the like, where the disposed third tube 212 can be brazed with the first tube 206, and the rotalock adaptor 202 to create a secured, reliable, and leak-proof connection between the conduit 302, 402, the assembly 200, and the compressor 100.

It is to be appreciated by a person skilled in the art that as the connection joint between the conduit and the first tube is brazed and further enclosed by the rotalock adaptor, there may be no stress at the connection point. As a result, the connection joint becomes strong and capable of effectively withstanding shock and vibration during movement or operation of the compressor and associated components, thereby preventing failure and consequently improving the performance and reliability. In addition, the round or rotationally symmetric design of the rotablock adaptor allows the connector assembly to be easily aligned and secured to the conduit in any orientation. This may help reduce the stress on the connection joint as well as the assembly and conduits, thereby strengthening the connection joint and reducing the risk of connection joint failure during assembling and during the movement or operation of the compressor and associated components.

Thus, this invention overcomes the challenges associated with scroll compressors and existing flag-type connection designs, by providing a simple and improved connector assembly for the scroll compressors, which facilitates in establishment of a strong, reliable, and leak-proof connection between the conduits and various ports of the scroll compressor.

While the subject invention has been described with reference to exemplary embodiments, it will be understood by those skilled in the art that various changes may be made without departing from the scope of the subject invention as defined by the appended claims. Modifications may be made to adopt a particular situation or material to the teachings of the subject invention without departing from the scope thereof. Therefore, it is intended that the subject invention not be limited to the particular embodiment disclosed, but that the subject invention includes all embodiments falling within the scope of the subject invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A connector assembly (200) for a scroll compressor (100), the assembly comprising:
a rotalock adaptor (202) having a first end (202-1) configured to be attached to an outer surface (104) of the compressor at one or more ports of the compressor such that a longitudinally extending bore-hole (204) of the rotalock adaptor remains in line and fluidically connected to the corresponding port (102); and
a first tube (206) extending coaxially through the bore-hole of the rotalock adaptor via a second end (202-2) of the rotalock adaptor such that a first end (206-1) of the first tube extends at least partially within an inner chamber of the compressor via the corresponding port and a second end (206-2) of the first tube extends at least partially outside of the second end of the rotalock adaptor,
wherein a connecting end of a conduit (302, 402) to be fluidically connected to the corresponding port (102) is configured to be coaxially connected to the second end of the first tube and further secured to the first tube and the rotalock adaptor using a fastener (208), and
**characterised in that**
the assembly comprises a second tube (210) of a first predefined length coaxially disposed within the first end of the first tube, wherein the second tube is configured to be expanded within the first tube and correspondingly keep the first tube in contact with a rim of the corresponding port to create a leak-proof connection between the rim and the first tube.

2. The assembly (200) of claim 1, wherein the one or more ports (102) comprise a suction port (102-1), wherein the conduit (302) is associated with and fluidically connected to a service valve (304).

3. The assembly (200) of claim 1 or 2, wherein the one or more ports (102) comprise a vapor injection port (102-2), wherein the conduit (302) is associated with and fluidically connected to an economizer.

4. The assembly (200) of any one of claims 1 to 3, wherein the conduit (302) is assembled to the rotalock adaptor (202) using a flare nut.

5. The assembly (200) of any one of claims 1 to 4, wherein the rotalock adaptor (202) comprises a housing that is rotationally symmetric about a longitudinal axis (A-A') of the rotalock adaptor and having the bore-hole (204) extending along the longitudinal axis between the first end (202-1) and the second end (202-2) of the housing.

6. The assembly (200) of any one of claims 1 to 5, wherein the fastener (208) is a flare nut that is rotatably configured around the connecting end of the conduit (302, 402); optionally
wherein the second end (202-2) of the rotalock adaptor (202) comprises an external thread (202-4) and the flare nut comprises an internal thread adapted to rotatably engage and fastened to the external threads of the rotalock adaptor to secure the conduit to the first tube (206) and the rotalock adaptor.

7. The assembly (200) of any one of claims 1 to 6, wherein the conduit (302, 402) is fluidically connected and secured to the corresponding port (102) using the flare nut (208) such that the flare nut and/or the second end (202-2) of the rotalock (202) encloses a connection point between the conduit and the first tube (206).

8. The assembly (200) of any one of claims 1 to 7, wherein the second tube (210) is made of a metal.

9. The assembly (200) of any one of claims 1 to 8, wherein the assembly comprises a third tube (212) of a second predefined length coaxially disposed in a gap between an outer surface of the second end (206-2) of the first tube (206) and the second end (202-2) of the rotalock adaptor (202), and the connected conduit (302, 402).

10. The assembly (200) of claim 9, wherein the third tube (212) extends at least partially within the bore-hole (204) of the rotalock adaptor (202) and the connected conduit (302, 402).

11. The assembly (200) of claim 9 or 10, wherein the third tube (212) is made of copper, wherein the third tube is brazed to the conduit (302, 402), the first tube (206), and the rotalock adaptor (202).

12. The assembly (200) of any one of claims 1 to 11, wherein the connecting end of the conduit (302, 402) is coaxially connected to the second end (206-2) of the first tube (206), such that the second end of the first tube extends at least partially within the conduit.

13. The assembly (200) of any one of claims 1 to 12, wherein the rotalock adaptor (202) is made of stainless steel.

14. The assembly (200) of any one of claims 1 to 13, wherein the first end (202-1) of the rotalock adaptor (202) is welded to the outer surface of the compressor (100) at the one or more ports (102) of the compressor.

15. The assembly (200) of any one of claims 1 to 14, wherein the first end (202-1) of the rotalock adaptor (202) comprises a raised portion that is configured to be welded to the outer surface of the compressor (100) at the one or more ports (102) of the compressor.

## Patentansprüche

1. Verbinderanordnung (200) für einen Scrollkompressor (100), wobei die Anordnung umfasst:
einen Rotalock-Adapter (202), der ein erstes Ende (202-1) aufweist, das dazu konfiguriert ist, an einer Außenoberfläche (104) des Kompressors an einem oder mehreren Anschlüssen des Kompressors so angebracht zu werden, dass ein sich in Längsrichtung erstreckendes Bohrloch (204) des Rotalock-Adapters in einer Linie bleibt und mit dem entsprechenden Anschluss (102) fluidisch verbunden ist; und
ein erstes Rohr (206), das sich koaxial durch das Bohrloch des Rotalock-Adapters über ein zweites Ende (202-2) des Rotalock-Adapters erstreckt, sodass ein erstes Ende (206-1) des ersten Rohrs sich zumindest teilweise innerhalb einer Innenkammer des Kompressors über den entsprechenden Anschluss erstreckt und ein zweites Ende (206-2) des ersten Rohrs sich zumindest teilweise außerhalb des zweiten Endes des Rotalock-Adapters erstreckt,
wobei ein Verbindungsende einer Leitung (302, 402), die mit dem entsprechenden Anschluss (102) fluidisch zu verbinden ist, dazu konfiguriert ist, koaxial mit dem zweiten Ende des ersten Rohrs verbunden zu werden und ferner an dem ersten Rohr und dem Rotalock-Adapter unter Verwendung eines Befestigungselements (208) gesichert zu werden, und **dadurch gekennzeichnet, dass** die Anordnung ein zweites Rohr (210) einer ersten vordefinierten Länge umfasst, das koaxial innerhalb des ersten Endes des ersten Rohrs eingerichtet ist, wobei das zweite Rohr dazu konfiguriert ist, innerhalb des ersten Rohrs aufgeweitet zu werden und dementsprechend das erste Rohr mit einem Rand des entsprechenden Anschlusses in Kontakt zu halten, um eine leckdichte Verbindung zwischen dem Rand und dem ersten Rohr zu erzeugen.

2. Anordnung (200) nach Anspruch 1, wobei der eine oder die mehreren Anschlüsse (102) einen Sauganschluss (102-1) umfassen, wobei die Leitung (302) einem Serviceventil (304) zugeordnet und mit diesem fluidisch verbunden ist.

3. Anordnung (200) nach Anspruch 1 oder 2, wobei der eine oder die mehreren Anschlüsse (102) einen Dampfeinspritzanschluss (102-2) umfassen, wobei die Leitung (302) einem Economizer zugeordnet und mit diesem fluidisch verbunden ist.

4. Anordnung (200) nach einem der Ansprüche 1 bis 3, wobei die Leitung (302) an dem Rotalock-Adapter (202) unter Verwendung einer Bördelmutter montiert ist.

5. Anordnung (200) nach einem der Ansprüche 1 bis 4, wobei der Rotalock-Adapter (202) ein Gehäuse umfasst, das rotationssymmetrisch um eine Längsachse (A-A') des Rotalock-Adapters ist und das Bohrloch (204) aufweist, das sich entlang der Längsachse zwischen dem ersten Ende (202-1) und dem zweiten Ende (202-2) des Gehäuses erstreckt.

6. Anordnung (200) nach einem der Ansprüche 1 bis 5, wobei das Befestigungselement (208) eine Bördelmutter ist, die drehbar um das Verbindungsende der Leitung (302, 402) konfiguriert ist; optional
wobei das zweite Ende (202-2) des Rotalock-Adapters (202) ein Außengewinde (202-4) umfasst und die Bördelmutter ein Innengewinde umfasst, das angepasst ist, um mit den Außengewinden des Rotalock-Adapters drehbar in Eingriff zu kommen und an diesen befestigt zu werden, um die Leitung an dem ersten Rohr (206) und dem Rotalock-Adapter zu sichern.

7. Anordnung (200) nach einem der Ansprüche 1 bis 6, wobei die Leitung (302, 402) mit dem entsprechenden Anschluss (102) unter Verwendung der Bördelmutter (208) fluidisch verbunden und gesichert ist, sodass die Bördelmutter und/oder das zweite Ende (202-2) des Rotalocks (202) einen Verbindungspunkt zwischen der Leitung und dem ersten Rohr (206) umschließt.

8. Anordnung (200) nach einem der Ansprüche 1 bis 7, wobei das zweite Rohr (210) aus einem Metall hergestellt ist.

9. Anordnung (200) nach einem der Ansprüche 1 bis 8, wobei die Anordnung ein drittes Rohr (212) einer zweiten vordefinierten Länge umfasst, das koaxial in einem Spalt zwischen einer Außenoberfläche des zweiten Endes (206-2) des ersten Rohrs (206) und dem zweiten Ende (202-2) des Rotalock-Adapters (202) und der verbundenen Leitung (302, 402) eingerichtet ist.

10. Anordnung (200) nach Anspruch 9, wobei das dritte Rohr (212) sich zumindest teilweise innerhalb des Bohrlochs (204) des Rotalock-Adapters (202) und der verbundenen Leitung (302, 402) erstreckt.

11. Anordnung (200) nach Anspruch 9 oder 10, wobei das dritte Rohr (212) aus Kupfer hergestellt ist, wobei das dritte Rohr an die Leitung (302, 402), das erste Rohr (206) und den Rotalock-Adapter (202) hartgelötet ist.

12. Anordnung (200) nach einem der Ansprüche 1 bis 11, wobei das Verbindungsende der Leitung (302, 402) koaxial mit dem zweiten Ende (206-2) des ersten Rohrs (206) verbunden ist, sodass das zweite Ende des ersten Rohrs sich zumindest teilweise innerhalb der Leitung erstreckt.

13. Anordnung (200) nach einem der Ansprüche 1 bis 12, wobei der Rotalock-Adapter (202) aus Edelstahl hergestellt ist.

14. Anordnung (200) nach einem der Ansprüche 1 bis 13, wobei das erste Ende (202-1) des Rotalock-Adapters (202) an die Außenoberfläche des Kompressors (100) an dem einen oder den mehreren Anschlüssen (102) des Kompressors geschweißt ist.

15. Anordnung (200) nach einem der Ansprüche 1 bis 14, wobei das erste Ende (202-1) des Rotalock-Adapters (202) einen erhabenen Abschnitt umfasst, der dazu konfiguriert ist, an die Außenoberfläche des Kompressors (100) an dem einen oder den mehreren Anschlüssen (102) des Kompressors geschweißt zu werden.

## Revendications

1. Ensemble (200) de raccord destiné à un compresseur (100) à spirales, l'ensemble comprenant :
un adaptateur rotalock (202) présentant une première extrémité (202-1) configurée pour être attachée à une surface externe (104) du compresseur au niveau d'un ou plusieurs orifices du compresseur, de sorte qu'un alésage (204) s'étendant longitudinalement de l'adaptateur rotalock reste aligné et raccordé fluidiquement à l'orifice (102) correspondant ; et
un premier tube (206) s'étendant coaxialement à travers l'alésage de l'adaptateur rotalock par l'intermédiaire d'une seconde extrémité (202-2) de l'adaptateur rotalock de sorte qu'une première extrémité (206-1) du premier tube s'étende au moins partiellement à l'intérieur d'une chambre interne du compresseur par l'intermédiaire de l'orifice correspondant et qu'une seconde extrémité (206-2) du premier tube s'étende au moins partiellement à l'extérieur de la seconde extrémité de l'adaptateur rotalock,
dans lequel une extrémité de raccordement d'un conduit (302, 402) à être raccordée fluidiquement à l'orifice (102) correspondant est configurée pour être raccordée coaxialement à la seconde extrémité du premier tube et fixée en outre au premier tube et à l'adaptateur rotalock à l'aide d'un élément de fixation (208), et
**caractérisé en ce que**
l'ensemble comprend un deuxième tube (210) d'une première longueur prédéfinie disposé coaxialement à l'intérieur de la première extrémité du premier tube, dans lequel le deuxième tube est configuré pour être élargi à l'intérieur du premier tube et pour maintenir en conséquence le premier tube en contact avec un bord de l'orifice correspondant afin de créer un raccordement étanche entre le bord et le premier tube.

2. Ensemble (200) selon la revendication 1, dans lequel le ou les orifices (102) comprennent un orifice d'aspiration (102-1), dans lequel le conduit (302) est associé à et raccordé fluidiquement à une vanne de service (304).

3. Ensemble (200) selon la revendication 1 ou 2, dans lequel le ou les orifices (102) comprennent un orifice d'injection de vapeur (102-2), dans lequel le conduit (302) est associé à et raccordé fluidiquement à un économiseur.

4. Ensemble (200) selon l'une quelconque des revendications 1 à 3, dans lequel le conduit (302) est assemblé à l'adaptateur rotalock (202) à l'aide d'un écrou évasé.

5. Ensemble (200) selon l'une quelconque des revendications 1 à 4, dans lequel l'adaptateur rotalock (202) comprend un boîtier qui est symétrique en rotation autour d'un axe longitudinal (A-A') de l'adaptateur rotalock et présentant l'alésage (204) s'étendant le long de l'axe longitudinal entre la première extrémité (202-1) et la seconde extrémité (202-2) du boîtier.

6. Ensemble (200) selon l'une quelconque des revendications 1 à 5, dans lequel l'élément de fixation (208) est un écrou évasé configuré pour tourner autour de l'extrémité de raccordement du conduit (302, 402) ; optionnellement
dans lequel la seconde extrémité (202-2) de l'adaptateur rotalock (202) comprend un filetage externe (202-4) et l'écrou évasé comprend un filetage interne conçu pour venir en prise par rotation avec et être fixé aux filetages externes de l'adaptateur rotalock afin de fixer le conduit au premier tube (206) et à l'adaptateur rotalock.

7. Ensemble (200) selon l'une quelconque des revendications 1 à 6, dans lequel le conduit (302, 402) est raccordé à et fixé fluidiquement à l'orifice (102) correspondant à l'aide de l'écrou évasé (208) de sorte que l'écrou évasé et/ou la seconde extrémité (202-2) du rotalock (202) entourent un point de raccordement entre le conduit et le premier tube (206).

8. Ensemble (200) selon l'une quelconque des revendications 1 à 7, dans lequel le deuxième tube (210) est en métal.

9. Ensemble (200) selon l'une quelconque des revendications 1 à 8, dans lequel l'ensemble comprend un troisième tube (212) d'une seconde longueur prédéfinie disposé coaxialement dans un espace entre une surface externe de la seconde extrémité (206-2) du premier tube (206) et la seconde extrémité (202-2) de l'adaptateur rotalock (202), et le conduit (302, 402) raccordé.

10. Ensemble (200) selon la revendication 9, dans lequel le troisième tube (212) s'étend au moins partiellement à l'intérieur de l'alésage (204) de l'adaptateur rotalock (202) et du conduit (302, 402) raccordé.

11. Ensemble (200) selon la revendication 9 ou 10, dans lequel le troisième tube (212) est en cuivre, dans lequel le troisième tube est brasé sur le conduit (302, 402), premier tube (206) et l'adaptateur rotalock (202).

12. Ensemble (200) selon l'une quelconque des revendications 1 à 11, dans lequel l'extrémité de raccordement du conduit (302, 402) est raccordée coaxialement à la seconde extrémité (206-2) du premier tube (206), de sorte que la seconde extrémité du premier tube s'étende au moins partiellement à l'intérieur du conduit.

13. Ensemble (200) selon l'une quelconque des revendications 1 à 12, dans lequel l'adaptateur rotalock (202) est en acier inoxydable.

14. Ensemble (200) selon l'une quelconque des revendications 1 à 13, dans lequel la première extrémité (202-1) de l'adaptateur rotalock (202) est soudée sur la surface externe du compresseur (100) au niveau du ou des orifices (102) du compresseur.

15. Ensemble (200) selon l'une quelconque des revendications 1 à 14, dans lequel la première extrémité (202-1) de l'adaptateur rotalock (202) comprend une partie surélevée qui est configurée pour être soudée sur la surface externe du compresseur (100) au niveau du ou des orifices (102) du compresseur.
